# EUROPÄISCHE PATENTANMELDUNG

(11) **EP 0 686 535 A1**
(43) Veröffentlichungstag der Anmeldung: **13.12.1995**
(21) Anmeldenummer: 95107806.2
(22) Anmeldetag: 22.05.1995
(51) Int. Cl.: B60R 22/46, B60R 21/32

(54) **Sensor zur fahrzeugsensitiven Auslösung eines Zünders**

(30) Priorität: 07.06.1994 DE 4419888
(71) Anmelder: TRW Occupant Restraint Systems GmbH, D-73553 Alfdorf (DE)
(72) Erfinder: Röhrle, Martin, D-73557 Mutlangen (DE)
(74) Vertreter: Degwert, Hartmut, Dipl.-Phys.

(57) **Zusammenfassung**

Ein Sensor zur fahrzeugsensitiven Auslösung eines Zünders für einen Treibsatz einer Insassen-Rückhalteeinrichtung in einem Fahrzeug, beispielsweise für einen Gurtstraffer oder einen Gassack, weist einen Massekörper (10) auf, der in einem Sensorgehäuse (11) bewegbar angeordnet abgestützt und unter der Krafteinwirkung einer Sensorfeder (12) entgegen einer ersten Richtung vorgespannt gehalten ist. Der Massekörper ist mit einem Arretierabschnitt versehen, der sich zu einer bezüglich der ersten Richtung rückwärtigen Seite öffnet und der eine parallel zur ersten Richtung verlaufende Kontaktfläche aufweist, die mit einer Kontaktgegenfläche an einem von hinten bezüglich der ersten Richtung in den Arretierabschnitt eingreifenden ersten Arm eines Sicherungshebels (16) in Berührung steht. Der Sicherungshebel (20) weist einen zweiten Arm auf, der in einer gesicherten Lage in Anlage mit einem Abschnitt eines von einer Schlagbolzenfeder (17) in Richtung auf den Zünder vorgespannten Schlagbolzens (18) steht und diesen so in seiner gespannten Lage sichert. Der Sicherungshebel (20) ist durch die Kraft einer Feder (17) mit einem Drehmoment beaufschlagt, das in der gesicherten Lage über die Kontaktgegenfläche und die Kontaktfläche am Massekörper (10) abgestützt ist.

## Beschreibung

Die Erfindung betrifft einen Sensor zur fahrzeugsensitiven Auslösung eines Zünders für einen Treibsatz einer Insassen-Rückhalteeinrichtung in einem Fahrzeug, insbesondere für einen Gurtstraffer oder ein Gassack-Insassenrückhaltesystem.

Derartige Sensoren sind allgemein bekannt. Der Auslösewert dieser bekannten Sensoren ist im allgemeinen schwierig einzustellen, da gegenseitige Beeinflussungen der einzelnen Bauteile ein präzises Auslösen erschweren.

Es ist daher die Aufgabe der vorliegenden Erfindung, einen Sensor der gattungsgemäßen Art derart auszubilden, daß eine Auslösung des Zünders noch präziser bei einem vorgegebenen Auslösewert erfolgt, wobei der Sensor raumsparend einbaubar sein soll.

Diese Aufgabe wird gemäß dem kennzeichnenden Teil des Anspruchs 1 dadurch gelöst, daß ein Massekörper in einem Sensorgehäuse bewegbar angeordnet abgestützt und unter der Krafteinwirkung einer Sensorfeder entgegen einer ersten Richtung vorgespannt gehalten ist, daß der Massekörper mit einem Arretierabschnitt versehen ist, der sich zu einer bezüglich der ersten Richtung rückwärtigen Seite öffnet und der eine parallel zur ersten Richtung verlaufende Kontaktfläche aufweist, die mit einer Kontaktgegenfläche an einem von hinten bezüglich der ersten Richtung in den Arretierabschnitt eingreifenden ersten Arm eines Sicherungshebels in Berührung steht, daß der Sicherungshebel einen zweiten Arm aufweist, der in einer gesicherten Lage in Anlage mit einem Abschnitt eines von einer Schlagbolzenfeder in Richtung auf den Zünder vorgespannten Schlagbolzens steht und diesen so in seiner gespannten Lage sichert, und daß der Sicherungshebel durch die Kraft einer Feder mit einem Drehmoment beaufschlagt ist, das in der gesicherten Lage über die Kontaktgegenfläche und die Kontaktfläche am Massekörper abgestützt ist.

Durch diesen Aufbau und insbesondere durch das Eingreifen Sicherungshebels von hinten in den Massekörper wird auf besonders einfache Weise ein Sensor geschaffen, der geringfügige Beschleunigungsbewegungen des Massekörpers zuläßt, wobei der Sicherungshebel erst bei Überschreiten eines Beschleunigungsschwellwertes freigegeben wird.

Vorteilhaft ist dabei, wenn der Sicherungshebel als Kipphebel ausgebildet ist, dessen Kippachse zwischen den beiden Armen gelegen ist, da hierdurch ein kompakter Aufbau ermöglicht wird.

Ein einfacher Aufbau wird dadurch erzielt, daß die den Sicherungshebel mit dem Drehmoment beaufschlagende Feder die Schlagbolzenfeder ist. Hierdurch kann auf eine zusätzliche Feder verzichtet und die Schlagbolzenfeder einer Zweitverwendung zugefÜhrt werden.

Die Masse des Schlagbolzens kann dann zu dessen Antrieb mitgenutzt werden, wenn der Schlagbolzen so im Sensorgehäuse gelagert ist, daß seine Bewegungsachse parallel zur Bewegungsachse des Massekörpers gerichtet ist.

Der Sensor läßt sich noch raumsparender aufbauen, wenn der Sicherungshebel zwischen dem Massekörper und dem Schlagbolzen gelegen ist.

Ist der Arretierabschnitt von einem Ringflansch an der rückwärtigen Stirnseite des Massekörpers und die Kontaktfläche von der radial inneren Fläche des Ringflansches gebildet, so läßt sich der Massekörper einfach und kostengünstig fertigen.

Die Fertigung wird ebenfalls vereinfacht, wenn der Massekörper ein rotationssymmetrischer Körper ist, dessen Rotationsachse sich in der ersten Richtung erstreckt. Außerdem ist die Funktionsfähigkeit einer derartige Konstruktion von der Winkellage des Massekörpers unabhängig, wodurch der Aufbau weiter vereinfacht wird.

Besonders vorteilhaft und funktionssicher ist der Sensor dann, wenn der Massekörper auf einer im Bereich ihrer Enden im Sensorgehäuse abgestützten, den Massekörper axial durchgreifenden Achse verschiebbar gelagert ist.

Endet die Kontaktfläche in einer rückwärtigen Kante des Arretierabschnitts, wobei die Kontaktfläche mit der rückwärtigen Stirnfläche des Arretierabschnitts einen Winkel von maximal 90° bildet, und endet die Kontaktgegenfläche in einer vorderen Kante des ersten Arms des Sicherungshebels, wobei die Kontaktgegenfläche mit der vorderen Stirnfläche des ersten Arms einen Winkel von maximal 90° bildet, so wird eine besonders präzise und zuverlässige Auslösung erreicht.

Wenn die mit dem Abschnitt des Schlagbolzens in Berührung stehende Stirnfläche des zweiten Arms des Sicherungshebels als Wälzfläche ausgebildet ist, die nach Freigabe des Sicherungshebels auf dem Abschnitt abwälzen kann, so erfolgt die Auslösung besonders schnell und reibungsarm.

Weitere Merkmale und Vorteile der Erfindung ergeben sich aus der folgenden Beschreibung einer Ausführungsform der Erfindung und aus der Zeichnung, auf die Bezug genommen wird. In der Zeichnung zeigen:
Fig. 1 eine teilweise geschnittene Seitenansicht eines Sensors gemäß der Erfindung,
Fig. 2 eine vergrößerte Ansicht der Einzelheit X in Fig. 1 und
Fig. 3 eine vergrößerte Ausschnittsansicht im Zeitpunkt der Auslösung.

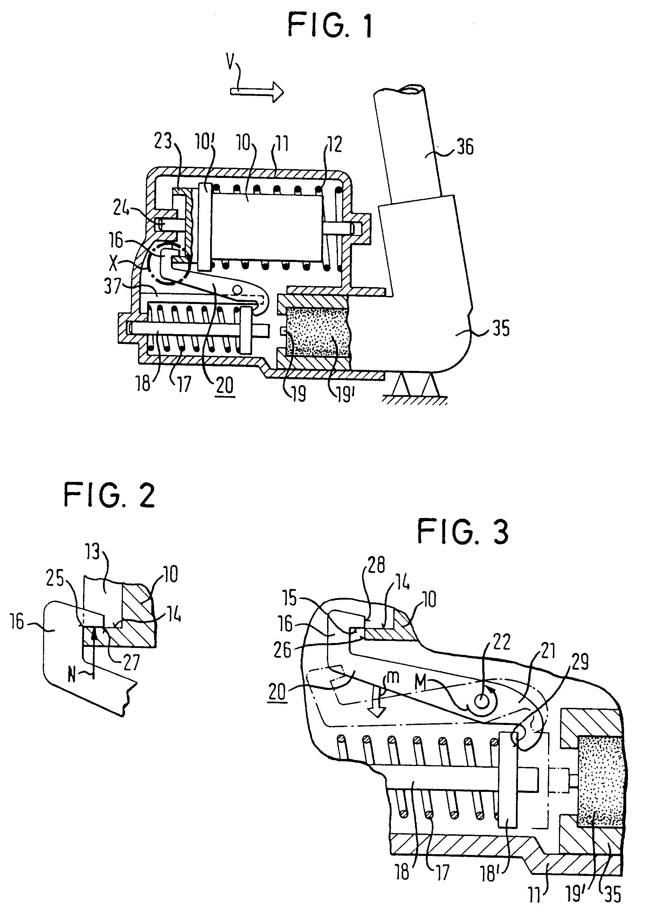

In Fig. 1 ist ein Sensor zur fahrzeugsensitiven, also beschleunigungsbedingten Auslösung eines Zünders 19 für einen Treibsatz 19' eines Gurtstraffers gezeigt. Der Zünder 19 und der Treibsatz 19' sind in einem um etwa 100° abgewinkelten Generatorgehäuse 35 angebracht. Am äußeren Ende des Generatorgehäuses 35 ist der Zylinder 36 eines an sich bekannten Gurtstraffers eingesetzt. Das andere Ende des Generatorgehäuses 35 ist in das Gehäuse 11 des Sensors eingesetzt und dort auf herkömmliche Weise mit dem Gehäuse verbunden.

Dem Zünder 19 axial gegenüber gelegen ist ein Schlagbolzen 18, der in einem zylinderartigen inneren Gehäuseabschnitt 37 axial verschiebbar angeordnet ist und von einer als Druckfeder ausgebildeten Schlagbolzenfeder 17 in Richtung auf den Zünder 19 vorgespannt ist.

Oberhalb des Schlagbolzens 18 ist ein zylindrischer Massekörper 10 auf einer mit ihren Enden im Gehäuse 11 gelagerten Achse 24 axial verschiebbar angeordnet. Die Achse 24 und damit die Bewegungsachse des Massekörpers 10 verläuft parallel zur Achse des Schlagbolzens 18 und in einer der Fahrtrichtung entsprechenden ersten Richtung V.

Der zylindrische Massekörper 10 wird von einer Sensorfeder 12, die sich mit ihrem einen Ende an der in Fahrtrichtung V gesehen vorderen Innenwand des Gehäuses 11 und mit ihrem anderen Ende an einem im rückwärtigen Bereich des Massekörpers 10 vorgesehenen Ringflansch abstützt. Auf der von der Sensorfeder 12 abgewandten Seite des sich radial nach außen erstreckenden Ringflansches 10' des Massekörpers 10 ist ein sich in Axialrichtung erstreckender Ringflansch 23 vorgesehen, der an der rückwärtigen Stirnseite des Massekörpers 10 eine kreisförmige Ausnehmung bildet, wobei der die Ausnehmung in Radialrichtung begrenzende Innenumfang des Ringflansches 23 einen Arretierabschnitt 13 für einen Sicherungshebel 20 bildet.

Der Sicherungshebel 20 ist zwischen dem Massekörper 10 und dem Schlagbolzen 18 angeordnet und um eine Achse 22 schwenkbar gelagert, die sich im wesentlichen rechtwinklig zur ersten Richtung V erstreckt. Der Sicherungshebel 20 weist einen ersten Arm 16 auf, der zum Massekörper 10 gerichtet ist und mit einem hakenartigen Endabschnitt von hinten bezüglich der ersten Richtung V in den Arretierabschnitt 13 des Massekörpers 10 eingreift. Am ersten Arm 16 des Sicherungshebels 20 ist eine Kontaktgegenfläche 15 vorgesehen, die mit der als Kontaktfläche 14 wirkenden Innenumfangsfläche des den Arretierabschnitt 13 bildenden Ringflansches 23 derart zusammenwirkt, daß die Kontaktfläche 14 und die Kontaktgegenfläche 15 in der in Fig. 1 gezeigten gesicherten Stellung des Sensors in gegenseitiger Anlage sind, wie auch in Fig. 2 zu erkennen ist.

Der Sicherungshebel 20 weist weiterhin einen zweiten Arm 21 auf, der sich bezüglich der Achse 22 des Sicherungshebels 20 entgegengesetzt zum ersten Arm 16 erstreckt. Der zweite Arm 21 des als Kipphebel ausgebildeten Sicherungshebels 20 ist ebenfalls gleichsinnig hakenartig gekrümmt, wobei am freien Ende des hakenartig gekrümmten zweiten Arms 21 eine als Wälzfläche ausgebildete abgerundete Stirnfläche 29 vorgesehen ist. Die Stirnfläche 29 steht in Berührung mit der zum Zünder 19 gerichteten Fläche eines Radialansatzes 18' des Schlagbolzens 18, wobei der Radialansatz 18' auf seiner vom Zünder 19 abgewandten Seite eine Abstützfläche für das eine Ende der sich mit ihrem anderen Ende im Gehäuse 11 abstützenden Schlagbolzenfeder 17 bildet, wie in Fig. 3 zu sehen ist.

In der in Fig. 1 gezeigten gesicherten Stellung des Sensors wird der Schlagbolzen 18 vom zweiten Arm 21 des Sicherungshebels 20 in seiner gespannten Lage gehalten. Die Federkraft der Schlagbolzenfeder 17 drückt dabei über den Abschnitt 18' des Schlagbolzens auf die Stirnfläche 29 des zweiten Arms 21 des Sicherungshebels 20. Dabei wird ein Moment M um die Achse 22 des Sicherungshebels 20 erzeugt. Dieses Moment M wird über die Kontaktgegenfläche 15 des ersten Arms 16 des Sicherungshebels 20 auf der Kontaktfläche 14 des Massekörpers 10 abgestützt, was in Fig. 2 durch die Normalkraft N schematisch dargestellt ist. Diese Normalkraft N wird dann vom Massekörper 10 über dessen Achse 24 im Gehäuse 11 abgestützt.

Bewegt sich nun der Massekörper 10 aufgrund einer Beschleunigung in der ersten Richtung V, so muß die Beschleunigungskraft zunächst die Federkraft der Sensorfeder 12 überwinden. Gleichzeitig wirkt die durch die Normalkraft N an der Kontaktfläche 14 und der Kontaktgegenfläche 15 erzeugte Reibungskraft der von der Beschleunigung ausgeübten Kraft entgegen.

Bei einer unkritischen Beschleunigung bewirkt zwar die in der Sensormasse auftretende Trägheitskraft ein Kräfteungleichgewicht gegenüber der Kraft der Sensorfeder 12 und der von der Normalkraft N erzeugten Reibungskraft, doch reicht dieses Kräfteungleichgewicht nicht aus, den Massekörper 10 soweit in Richtung V zu verschieben, daß die Kontaktfläche 14 und die Kontaktgegenfläche 15 außer Eingriff geraten. Beim Abklingen dieser unkritischen Beschleunigung wird der Massekörper 10 daher von der Sensorfeder 12 wieder entgegen der ersten Richtung V in seine in Fig. 1 gezeigte Lage zurückgedrückt.

Im Falle einer kritischen Beschleunigung wird der Massekörper 10 soweit in die erste Richtung V verschoben, daß die vordere Kante 27 des ersten Arms 16 des Sicherungshebels 20 und die hintere Kante 25 des Ringflansches 23 des Massekörpers 10 übereinander hinwegbewegt werden, so daß die Kontaktfläche 14 und die Kontaktgegenfläche 15 außer Eingriff geraten.

In dem Zeitpunkt, in dem die Kante 27 und die Kante 25 übereinander stehen, ist eine labile Gleichgewichtssituation erreicht, die bei geringfügigem Weiterbewegen des Massekörpers 10 in der ersten Richtung V ein Abgleiten der vorderen Stirnfläche 28 des ersten Arms 16 des Sicherungshebels 20 an der rückwärtigen Stirnfläche 26 des Massekörpers 10 gestattet, wobei der Sicherungshebel 20 in der in Fig. 3 angedeuteten Richtung m in die dort strichpunktiert gezeigte Lage schwenkt. Dabei wälzt die Stirnfläche 29 des zweiten Abschnitts 21 des Sicherungshebels 20 auf dem Abschnitt 18' des Schlagbolzens 18 ab und gleitet von diesem Abschnitt radial weg, so daß der Schlagbolzen freigegeben wird und seine in Fig. 3 gezeigte strichpunktierte Stellung einnehmen kann, in der er den Zünder 19 auslöst.

Das Vorsehen zweier getrennter Federn, nämlich der Sensorfeder 12 und der Schlagbolzenfeder 17 besitzt den Vorteil, daß sich die auf die Fahrzeugbeschleunigung reagierenden Bauelemente und die Bauelemente, die für die Auslösung des Zünders 19 erforderlich sind, nicht gegenseitig, beispielsweise durch Reibung, nur geringfügig beeinflussen. Außerdem hat die Abstimmung der Sensorfeder keinen Einfluß auf die in der Schlagbolzenfeder gespeicherte Zündenergie.

Das fest mit dem Sensorgehäuse 11 verbundene Generatorgehäuse 35 sorgt dafür, daß ein Seilbiegesteifigkeits-Einfluß auf das Sensorauslöseverhalten ausgeschaltet ist. Auch kann dadurch die Gurtstraffereinheit näher am Aufroller eingesetzt werden. Außerdem entfällt der Platzbedarf für einen Pendelausschlag, so daß die gesamte Einheit kompakter aufgebaut werden kann. Der Entfall der Pendellagerung sorgt zudem für eine höhere Festigkeit der Verbindung mit dem Generatorgehäuse. Weiterhin ist die Streuung der Sensorfederkraft aufgrund streuender Einspannlängen gering, da die Federrate sehr klein gehalten werden kann.

Dadurch, daß der Sensor einfach auf das Generatorgehäuse 35 aufgesteckt und dort befestigt werden kann, ist es möglich, den Sensor als letztes Teil nach erfolgter Montage des Gurtstraffers aufzusetzen, was die Montage wesentlich vereinfacht und die Montagesicherheit erhöht. Außerdem wird dadurch eine Baugruppenmontage möglich. Der erfindungsgemäße Sensor ist zudem so aufgebaut, daß er sowohl auf der Fahrerals auch auf der Beifahrerseite verwendbar ist.

## Patentansprüche

1. Sensor zur fahrzeugsensitiven Auslösung eines Zünders für einen Treibsatz einer Insassen-Rückhalteeinrichtung in einem Fahrzeug, insbesondere für einen Gurtstraffer oder ein Gassack-Insassenrückhaltesystem, dadurch gekennzeichnet, daß ein Massekörper (10) in einem Sensorgehäuse (11) bewegbar angeordnet abgestützt und unter der Krafteinwirkung einer Sensorfeder (12) entgegen einer ersten Richtung (V) vorgespannt gehalten ist, daß der Massekörper (10) mit einem Arretierabschnitt (13) versehen ist, der sich zu einer bezüglich der ersten Richtung (V) rückwärtigen Seite öffnet und der eine parallel zur ersten Richtung (V) verlaufende Kontaktfläche (14) aufweist, die mit einer Kontaktgegenfläche (15) an einem von hinten bezüglich der ersten Richtung (V) in den Arretierabschnitt (13) eingreifenden ersten Arm (16) eines Sicherungshebels (20) in Berührung steht, daß der Sicherungshebel (20) einen zweiten Arm (21) aufweist, der in einer gesicherten Lage in Anlage mit einem Abschnitt (18') eines von einer Schlagbolzenfeder (17) in Richtung auf den Zünder (19) vorgespannten Schlagbolzens (18) steht und diesen so in seiner gespannten Lage sichert, und daß der Sicherungshebel (20) durch die Kraft der Schlagbolzenfeder (17) mit einem Drehmoment (M) beaufschlagt ist, das in der gesicherten Lage über die Kontaktgegenfläche (15) und die Kontaktfläche (14) am Massekörper (10) abgestützt ist.

2. Sensor nach Anspruch 1, dadurch gekennzeichnet, daß der Sicherungshebel (20) als Kipphebel ausgebildet ist, dessen Kippachse (22) zwischen den beiden Armen (16, 21) gelegen ist.

3. Sensor nach einem der vorhergehenden Ansprüche, dadurch gekennzeichnet, daß der Schlagbolzen (18) so im Sensorgehäuse (11) gelagert ist, daß seine Bewegungsachse parallel zur Bewegungsachse des Massekörpers (10) gerichtet ist.

4. Sensor nach einem der vorhergehenden Ansprüche, dadurch gekennzeichnet, daß der Sicherungshebel (20) zwischen dem Massekörper (10) und dem Schlagbolzen (18) gelegen ist.

5. Sensor nach einem der vorhergehenden Ansprüche, dadurch gekennzeichnet, daß der Arretierabschnitt (13) von einem Ringflansch (23) an der rückwärtigen Stirnseite des Massekörpers (10) und die Kontaktfläche (14) von der radial inneren Fläche des Ringflansches (23) gebildet ist.

6. Sensor nach einem der vorhergehenden Ansprüche, dadurch gekennzeichnet, daß der Massekörper (10) ein rotationssymmetrischer Körper ist, dessen Rotationsachse sich in der ersten Richtung (V) erstreckt.

7. Sensor nach einem der vorhergehenden Ansprüche, dadurch gekennzeichnet, daß der Massekörper (10) auf einer im Bereich ihrer Enden im Sensorgehäuse abgestützten, den Massekörper (10) axial durchgreifenden Achse (24) verschiebbar gelagert ist.

8. Sensor nach einem der vorhergehenden Ansprüche, dadurch gekennzeichnet, daß die Kontaktfläche (14) in einer rückwärtigen Kante (25) des Arretierabschnitts (13) endet, wobei die Kontaktfläche (14) mit der rückwärtigen Stirnfläche (26) des Arretierabschnitts (13) einen Winkel von maximal 90° bildet, und daß die Kontaktgegenfläche (15) in einer vorderen Kante (27) des ersten Arms (16) des Sicherungshebels (20) endet, wobei die Kontaktgegenfläche (15) mit der vorderen Stirnfläche (28) des ersten Arms (16) einen Winkel von maximal 90° bildet.

9. Sensor nach einem der vorhergehenden Ansprüche, dadurch gekennzeichnet, daß die mit dem Abschnitt (18') des Schlagbolzens (18) in Berührung stehende Stirnfläche (29) des zweiten Arms (21) des Sicherungshebels (20) als Wälzfläche ausgebildet ist, die nach Freigabe des Sicherungshebels (20) auf dem Abschnitt (18') abwälzen kann.

10. Sensor nach einem der vorstehenden Ansprüche, dadurch gekennzeichnet, daß das Sensorgehäuse (11) starr mit einem rohrförmigen, abgewinkelten Generatorgehäuse (35) verbunden ist, das einen ersten, in das Sensorgehäuse (11) hineinragenden und den Treibsatz (19') sowie den Zünder (19) aufnehmenden Schenkel und einen zweiten Schenkel aufweist, in dem ein rohrförmiger Zylinder (36) eines Strafferantriebs verankert ist.
